# EUROPEAN PATENT APPLICATION

(11) **EP 4 738 532 A1**
(43) Date of publication of application: **06.05.2026**
(21) Application number: 25205484.6
(22) Date of filing: 29.09.2025
(51) Int. Cl.: H01M 10/613, H01M 10/625, H01M 10/647, H01M 10/6556, H01M 10/6557, H01M 10/6568, H01M 50/209

(54) **BATTERY MODULE AND ENERGY STORAGE SYSTEM**

(30) Priority: 29.10.2024 KR 20240149660
(71) Applicant: SAMSUNG SDI CO., LTD., Yongin-si, Gyeonggi-do 17084 (KR)
(72) Inventor: PARK, Jong Ho, 16678 SUWON-SI (KR)
(74) Representative: Regimbeau

(57) **Abstract**

A battery module (1000), including a plurality of secondary batteries (100), and a housing (300) accommodating the plurality of secondary batteries, wherein the housing includes a first cooling plate (310) supporting lower portions of the plurality of secondary batteries, and one or more second cooling plates (320) connected to the first cooling plate, the one or more second cooling plates surrounding at least portions of side surfaces of the plurality of secondary batteries.

## Description

### TECHNICAL FIELD

The present disclosure relates to a battery module and an energy storage system.

### TECHNICAL BACKGROUND

Secondary batteries are batteries that can be charged and discharged, unlike primary batteries that cannot be recharged. Low-capacity secondary batteries are used in small portable electronic devices such as smartphones, feature phones, laptop computers, digital cameras, and camcorders, and high-capacity batteries are widely used as motor driving power sources, power storage batteries, and the like in hybrid vehicles, electric vehicles, and the like. The secondary battery includes an electrode including a positive electrode and/or a negative electrode, an electrode assembly including the electrode, a case which accommodates the electrode assembly, and an electrode terminal connected to the electrode assembly.

As the demand for secondary batteries increases, there are increasing cases where it is used in the form of a module including a plurality of secondary batteries rather than a single secondary battery. A battery module generally includes a plurality of secondary batteries. The battery module allows the plurality of secondary batteries to be electrically connected and used.

The above-described information disclosed in the background technology of the present disclosure is only for improving understanding of the background of the present disclosure, and accordingly, may include information that does not constitute the related art.

### SUMMARY

The invention relates to a battery module and to an energy storage system as defined in the appended claims.

Embodiments include a battery module, including a plurality of secondary batteries, and a housing accommodating the plurality of secondary batteries, wherein the housing includes a first cooling plate supporting lower portions of the plurality of secondary batteries, and one or more second cooling plates connected to the first cooling plate, the one or more second cooling plates surrounding at least portions of side surfaces of the plurality of secondary batteries.

At least one of the first cooling plate and the one or more second cooling plates may include a cooling flow path through which a coolant circulates.

At least one of the first cooling plate and the one or more second cooling plates may include one or more cooling holes that cool the battery module.

The one or more second cooling plates may include a first side surface plate and a second side surface plate facing the first side surface plate.

The battery module may further include an end plate including a first end plate that connects one side of the first side surface plate and one side of the second side surface plate, and a second end plate that connects another side of the first side surface plate and another side of the second side surface plate.

The second cooling plate may include a third side surface plate connecting one side of the first side surface plate and one side of the second side surface plate, and a fourth side surface plate connecting another side of the first side surface plate and another side of the second side surface plate.

The battery module may further include two or more battery laminates of the plurality of secondary batteries stacked in a first direction, wherein the two or more battery laminates are spaced apart from each other at a predetermined interval in a second direction.

The first cooling plate may further include a first reinforcement member provided in response to (i.e, aligned with) the predetermined interval.

The first cooling plate may have a thickness of a region corresponding to the predetermined interval that is thicker than that of a region corresponding to the battery laminate.

The first cooling plate may further include a second reinforcement member in a region connected to the second cooling plate.

The first cooling plate may have a thickness of a region connected to the second cooling plate that is thicker than that of a region corresponding to the plurality of secondary batteries.

The battery module may further include a reinforcement plate supporting a lower portion of the first cooling plate.

An energy storage system, including a plurality of the battery module, and a rack accommodating the plurality of the battery module.

### BRIEF DESCRIPTION OF THE DRAWINGS

Features will become apparent to those of ordinary skill in the art by describing in detail exemplary embodiments with reference to the attached drawings, in which:
FIG. 1 is a perspective view of a battery module according to an embodiment of the present disclosure;
FIG. 2 is a perspective view of a secondary battery according to an embodiment of the present disclosure;
FIG. 3 is a cross-sectional view of the secondary battery according to an embodiment of the present disclosure;
FIG. 4 is a perspective view of the secondary battery according to an embodiment of the present disclosure;
FIG. 5 is a cross-sectional view of the battery module according to an embodiment of the present disclosure;
FIG. 6 is a perspective view of a housing according to an embodiment of the present disclosure;
FIG. 7 is a perspective view of the housing according to an embodiment of the present disclosure;
FIG. 8 is a cross-sectional view of the battery module according to an embodiment of the present disclosure;
FIG. 9 is a cross-sectional view of the battery module according to an embodiment of the present disclosure;
FIG. 10 is a cross-sectional view of the battery module according to an embodiment of the present disclosure;
FIG. 11 is a perspective view of an energy storage system according to an embodiment of the present disclosure; and
FIG. 12 is an enlarged view of portion M with respect to FIG. 11.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms and words used in the present specification and claims should not be construed as being limited to their usual or dictionary meanings, and should be interpreted as meanings and concepts consistent with the proposed technical disclosure based on the principle that the inventor may appropriately define the concept of terms to describe his/her invention in the best way. Accordingly, since the embodiments disclosed in the present specification and configurations shown in the drawings are only some of the most preferable embodiments of the present disclosure, it should be understood that there are various equivalents and modifications which may replace these at the time of filing the present application. Further, when used in the present specification, "comprise," "include," "comprising" or "including" specify the presence of mentioned shapes, numbers, steps, operations, members, elements and/or groups thereof, and do not exclude the presence or addition of one or more other shapes, numbers, steps, operations, members, elements and/or groups thereof. In addition, when the embodiments of the present disclosure are described, "may" and "may be" may include "one or more embodiments of the present disclosure".

The mention that two objects to be compared are 'the same' means that that the two objects are 'substantially the same.' Accordingly, 'substantially the same' may include a deviation considered as a low level in the art, for example, a deviation within 5%. Further, uniformity of a parameter in a certain region may mean uniformity from an average point of view.

Although first, second, and the like are used to describe various components, these components are not limited by these terms. These terms are only used to distinguish one component from another component, and a first component may also be a second component unless otherwise stated.

Throughout the specification, unless otherwise stated, each component may be singular or plural.

Disposition of an arbitrary component at "an upper portion (or a lower portion)" of a component or "on (or under)" the component means that another component may be interposed between the component and the arbitrary component disposed on (or under) the component or the arbitrary component may be disposed in contact with an upper surface (or a lower surface) of the component.

Further, when it is disclosed that a certain component is "connected," "coupled," or "linked" to another component, it should be understood that the components may be directly connected or linked to each other, but another component may be "interposed" between the components, or the components may be "connected," "coupled," or "linked" through another component. In addition, a case in which a certain part is electrically connected to another part includes not only a case in which the parts are directly connected, but also a case in which the parts are connected with another element therebetween.

Throughout the specification, "A and/or B" means to A, B, or A and B unless otherwise stated. That is, "and/or" includes all combinations or any combination of a plurality of listed items. "C to D" means greater than or equal to C and less than or equal to D unless otherwise specified.

When phrases such as "at least one of A, B, and C, " "at least one of A, B, or C, " "at least one selected from groups A, B, and C, " or "at least one selected from A, B, and C" are used to specify a list of elements A, B, and C, the phrases may refer to any one of all suitable combinations.

As used herein, the terms "use," may be considered synonymous with the terms "utilize,". As used herein, the terms "substantially," "about," and similar terms are used as terms of approximation and not as terms of degree, and are intended to account for the inherent variations in measured or calculated values that would be recognized by those of ordinary skill in the art.

Although the terms "first," "second," "third," and the like may be used in the present specification to describe various elements, components, regions, layers and/or sections, these elements, components, regions, layers and/or sections should not be limited by these terms. These terms are used only to distinguish one element, component, region, drawing layer, or cross-section from another element, component, region, drawing layer, or cross-section. Accordingly, a first element, component, region, layer, or section to be described below may be referred to a second element, component, region, layer, or section without departing from the teachings of the present disclosure.

Spatially related terms such as "beneath," "below," "lower," "above," and "upper" are used for easy understanding of one element or feature and another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" becomes "upper" or "above." Accordingly, "below" is a concept encompassing "above" or "below."

The terms used in the present specification is intended to describe the embodiments of the present disclosure, and is not intended to limit the present disclosure.

In the present specification, an x-axis represents a width direction of a battery module 1000. A y-axis represents a longitudinal direction of the battery module 1000. In this case, the y-axis is perpendicular to the x-axis. In the present specification, a z-axis represents a height direction of the battery module 1000. In this case, the z-axis is perpendicular to each of the x-axis and y-axis.

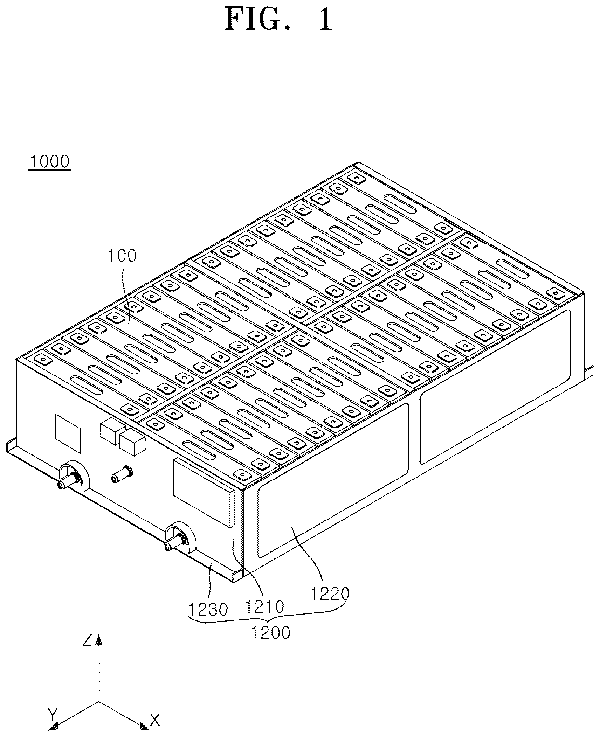

FIG. 1 is a perspective view of a battery module.

In FIG. 1, 1000 represents the battery module 1000.

The battery module 1000 includes a plurality of secondary batteries 100, and a housing 1200 which accommodates the plurality of secondary batteries 100.

The battery module 1000 includes a plurality of secondary batteries 100. The secondary batteries 100 may function as a unit structure which stores and supplies power in the battery module 1000.

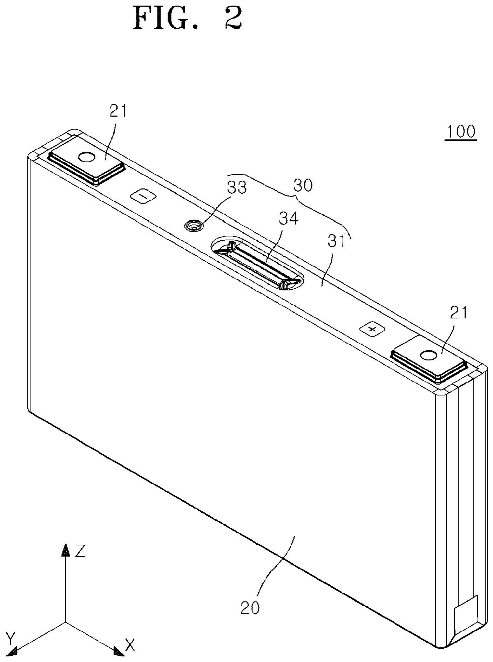

Each of the plurality of secondary battery 100 includes, for example, a battery cell in which a case 20 (see FIG. 2) is formed in a prismatic shape. However, the shape of the secondary battery 100 applicable to the battery module 1000 according to an embodiment of the present disclosure may be formed in various shapes, such as a pouch shape, a cylindrical shape, a coin shape, and the like. Hereinafter, an example in which the battery cell included in the battery module 1000 is formed in the prismatic shape will be described.

The plurality of secondary batteries 100 are disposed in the housing 1200. In this case, the housing 1200 forms an approximate exterior of the battery module 1000. The housing 1200 may function as a configuration which entirely supports the plurality of secondary batteries 100.

The housing 1200 accommodates the plurality of secondary batteries 100 in an inner space.

The plurality of secondary batteries 100 are arranged in a first direction in the inner space of the housing 1200.

The first direction may be the same direction as the longitudinal direction (the y-axis) of the battery module 1000. For example, the secondary battery 100 includes a first side surface and a second side surface facing each other. In this case, the first side surface and the second side surface include wide surfaces among the side surfaces of each of the plurality of secondary batteries 100. For example, the plurality of secondary batteries 100 may be arranged while the first side surface of one secondary battery and the second side surface of an adjacent battery cell face each other. In this case, the first direction is a direction from the first side surface toward the second side surface.

The housing 1200 may include an end plate 1210, a side plate 1220, and a lower plate 1230 forming an inner space which accommodates the plurality of secondary batteries 100.

The end plate 1210 forms a portion of a side surface of the housing 1200. For example, the end plate 1210 forms a side surface located in the first direction among side surfaces of the housing 1200. Accordingly, the end plate 1210 may be formed on the side surface of the secondary battery 100 while facing wide surfaces of the plurality of secondary batteries 100. For example, two of the end plate 1210 facing each other may be formed as a pair of end plates to form both side surfaces of the housing 1200.

Each of the plurality of secondary batteries 100 may cause (e.g., experience or exhibit) a phenomenon of swelling when repeatedly charged and discharged. In this case, the secondary battery 100 may more prominently exhibit the swelling phenomenon on the relatively wide side surface. The end plate 1210 may restrain the plurality of secondary batteries 100 from swelling and/or support the exterior of the housing 1200 even when the swelling phenomenon occurs among the plurality of secondary batteries 100.

A pair of the side plate 1220 forms other portions of the side surfaces of the housing 1200. For example, the side plate 1220 forms a side surface located in a second direction among the side surface of the housing 1200. In this case, the second direction may be the same direction as the width direction (the x-axis) of the battery module 1000. In this case, the second direction may be a direction perpendicular to the first direction. For example, the pair of the side plate 1220 facing each other may form other both side surfaces of the housing 1200. In this case, one side and the other side (e.g., another side) of each of the pair of the side plate 1220 may be respectively connected to the pair of the end plate 1210.

The lower plate 1230 forms a lower surface of the housing 1200. The lower plate 1230 may support, for example, the plurality of secondary batteries 100 from a lower portion thereof. The lower plate 1230 may be connected to the pair of the end plate 1210 and the pair of the side plate 1220.

Through this configuration, the housing 1200 may form an inner space formed by the pair of the end plate 1210, the pair of the side plate 1220, and the lower plate 1230.

FIG. 2 is a perspective view of the secondary battery according to an embodiment of the present disclosure.

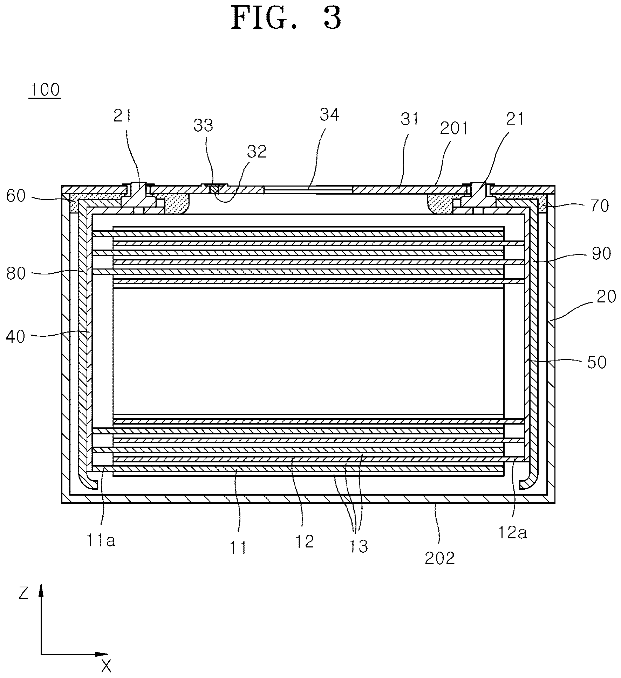

FIG. 3 is a cross-sectional view of the secondary battery according to an embodiment of the present disclosure.

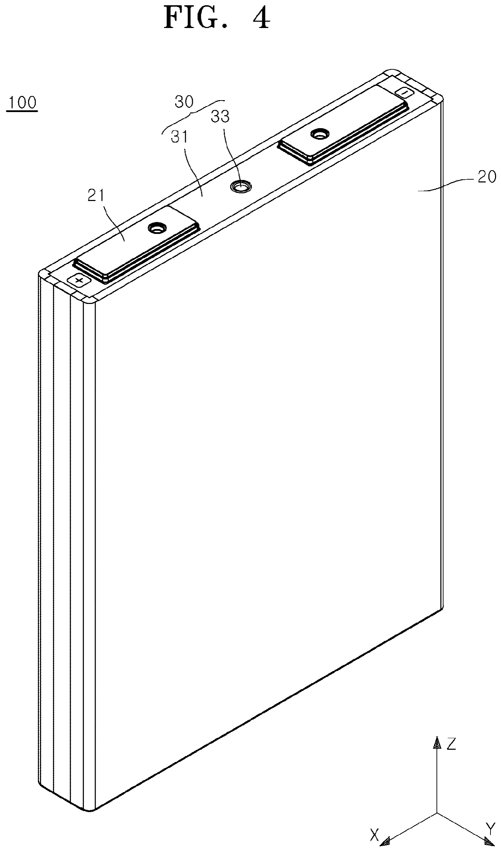

FIG. 4 is a perspective view of the secondary battery according to an embodiment of the present disclosure.

As shown in FIGS. 2 to 4, each of the plurality of secondary batteries 100 according to an embodiment of the present disclosure may be formed as a prismatic battery of various shapes.

For example, as shown in FIG. 2, the secondary battery 100 may be formed with an exterior in which a length in the width direction (the x-axis) is greater than a length in the height direction (the z-axis).

In other embodiments, for example, as shown in FIG. 4, the secondary battery 100 may be formed with an exterior in which the length in the height direction (the z-axis) is greater than the length in the width direction (the x-axis). Thus, the secondary battery 100 may be formed to be relatively long in the height direction (the z-axis) to form a tall cell shape.

The secondary battery 100 may include one or more electrode assemblies including a positive electrode 11, a negative electrode 12, and a separator 13 which is an insulator between the positive electrode 11 and the negative electrode 12, and formed by winding the positive electrode 11, the negative electrode 12, and the separator 13, the case 20 in which the electrode assembly is accommodated, and a cap assembly 30 coupled to an opening of the case 20.

Hereinafter, an example in which the secondary battery 100 is a prismatic battery as a lithium-ion secondary battery will be described. However, the secondary battery 100 may be a lithium polymer battery or a cylindrical battery.

The positive electrode 11 and the negative electrode 12 may include a coated portion which is a region where an active material is applied on a current collector formed of a thin metal foil, and uncoated portions 11a and 12a which are regions where the active material is not coated.

The positive electrode 11 and the negative electrode 12 may be wound with the separator 13, which is an insulator, interposed therebetween. However, the electrode assembly may also be formed in a stacked structure in which the positive electrode 11 and the negative electrode 12 formed of a plurality of sheets are alternately stacked with the separator 13 therebetween.

The case 20 may form an overall exterior of the secondary battery 100, and may be formed of a conductive metal such as aluminum, an aluminum alloy, or nickel-plated steel. Further, the case 20 may provide a space where the electrode assembly is accommodated.

The cap assembly 30 may include a cap plate 31 which covers the opening of the case 20, and the case 20 and the cap plate 31 may be formed of a conductive material. Here, a terminal 21 electrically connected to the positive electrode 11 or the negative electrode 12 may be installed to protrude outward through the cap plate 31.

Further, a pair of the terminal 21 protruding outward from the cap plate 31 may be formed. The pair of the terminal 21 may be respectively connected to the positive electrode 11 and the negative electrode 12, and may function as a positive electrode terminal and a negative electrode terminal of the secondary battery 100.

More specifically, the terminal 21 may be electrically connected to a current collector including first and second current collectors (hereinafter, referred to as positive electrode and negative electrode current collectors) joined to a positive electrode uncoated portion 11a or a negative electrode uncoated portion 12a by welding. For example, the pair of the terminal 21 may be respectively joined to the positive electrode and negative electrode current collectors 40 and 50 by welding. However, the pair of the terminal 21 and the positive electrode and negative electrode current collectors 40 and 50 may be formed to be integrally joined. An outer circumferential surface of an upper pillar of the terminal 21 may be threaded, and may be fixed to the cap plate 31 with a nut.

However, terminal 21 may be formed in a rivet structure and riveted to the cap plate 31, or may be joined to the cap plate 31 by welding.

Further, the cap plate 31 may be formed of a thin plate and may be coupled to the opening of the case 20, and in the cap plate 31, an electrolyte inlet 32 on which a sealing stopper 33 may be installed may be formed and a vent 34 may be installed.

The vent 34 may be opened and closed in response to a change in internal pressure of the case 20. That is, the vent 34 may maintain a closed state to seal the case 20 during a normal operation of the electrode assembly. The vent 34 may be opened as the internal pressure of the case 20 rises above a set value due to overcharging, the occurrence of fire, or the like, and may discharge emissions such as flames, gas, or the like from the inside of the case 20 to the outside of the case 20.

Further, an insulating member may be installed between the electrode assembly and the cap plate 31. The insulating member may include first and second lower insulating members 60 and 70, and each of the first and second lower insulating members 60 and 70 may be installed between the electrode assembly and the cap plate 31.

Further, according to the embodiment, one end of a separation member which may be installed to face one side surface of the electrode assembly may be installed between the insulating member and the terminal 21.

Here, the separation member may include first and second separation members 80 and 90.

Accordingly, one end of each of the first and second separation members 80 and 90, which may be installed to each face one side surface (e.g., opposite surfaces) of the electrode assembly, may be installed between the first and second lower insulating members 60 and 70 and the electrode terminal 21 (positive) and the electrode terminal 22 (negative), respectively.

As a result, the electrode terminal 21 (positive) and the electrode terminal 22 (negative) joined to the positive and negative electrode current collectors 40 and 50, respectively, by welding may be joined to the first and second lower insulating member 60 and 70 and the one end of each of the first and second separation members 80 and 90.

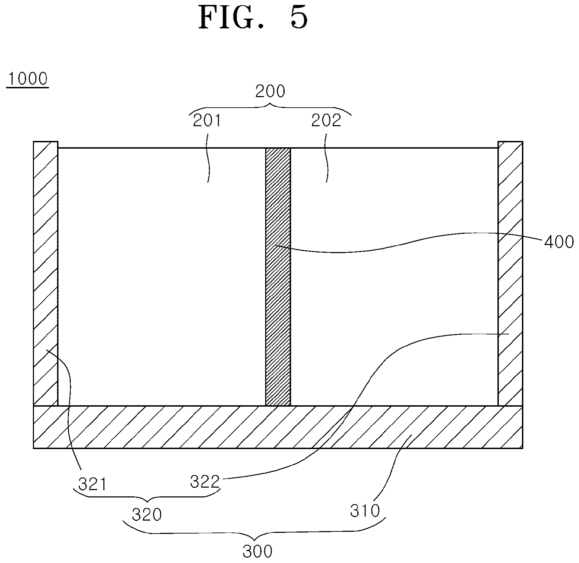

FIG. 5 is a cross-sectional view of the battery module according to an embodiment of the present disclosure.

The battery module 1000 according to an embodiment of the present disclosure includes a plurality of secondary batteries 100 and a housing 300 which accommodates the plurality of secondary batteries 100. The housing 300 includes a first cooling plate 310 which supports lower portions of the plurality of secondary batteries 100, and one or more second cooling plates 320 formed to be connected to the first cooling plate 310 and surrounding at least portions of side surfaces of the plurality of secondary batteries 100.

The battery module 1000 includes the plurality of secondary batteries 100 and the housing 300. In the description of the battery module 1000, overlapping descriptions in FIGS. 1 to 4 may be omitted.

The battery module 1000 may include, for example, the plurality of secondary batteries 100 described in FIGS. 2 to 4.

Further, for example, the battery module 1000 may include one or more battery laminates 200 (e.g., each battery laminate being part of a battery within the battery module 1000). In the battery laminate 200, the plurality of secondary batteries 100 are formed to be arranged in the first direction. Two or more battery laminates 200 may be spaced apart from each other at a certain (e.g., predetermined) interval and arranged in the second direction.

In this case, any one of the secondary batteries 100 may generate heat during a charging and discharging process and/or as a charging and discharging cycle is repeated. When this heat is not cooled, an internal temperature of the battery module 1000 continuously increases. Further, the increased heat may cause problems in functions, efficiency, and/or safety while damaging to components of the battery module 1000.

Meanwhile, as described with respect to FIG. 4, the secondary battery 100 may be elongated in the height direction. In this case, when cooling is performed only at the lower portion of the secondary battery 100, the cooling may not be efficiently achieved at middle and upper portions of the secondary battery 100. Furthermore, the problem in safety may occur as a temperature deviation occurs in the upper and lower portions of the secondary battery 100.

Accordingly, a method of maintaining the internal temperature of the battery module 1000 within a certain range is required regardless of the shape or size of the secondary battery 100.

To this end, the battery module 1000 according to an embodiment of the present disclosure includes the housing 300 including the first cooling plate 310 and the second cooling plates 320.

The first cooling plate 310 may form the lower portion of the housing 300.

For example, the first cooling plate 310 may be located at the lower portions of the plurality of secondary batteries 100 and may support the plurality of secondary batteries 100 from the lower portions. For example, the first cooling plate 310 may replace a role of the lower plate 1230 described with respect to FIG. 1. That is, the first cooling plate 310 according to an embodiment of the present disclosure may simultaneously perform the role of the lower plate 1230 and a role of the cooling plate.

For example, when the secondary battery 100 is formed in the prismatic shape, the first cooling plate 310 may be formed in a substantially quadrangular plate shape. For example, the first cooling plate 310 may be formed in a rectangular shape formed to be relatively long in the longitudinal direction (the y-axis) of the battery module 1000 and relatively short in the width direction (the x-axis) of the battery module 1000.

Accordingly, the first cooling plate 310 may support the plurality of secondary batteries 100 arranged in the first direction and/or the plurality of battery laminates 200 arranged in the second direction from the lower portions.

The second cooling plate 320 may form at least a portion of a side portion of the housing 300.

For example, the second cooling plate 320 may support the plurality of secondary batteries 100 from the side portions while surrounding at least portions of side surfaces of the plurality of secondary batteries 100. For example, the second cooling plate 320 may replace a role of the side plate 1220 described with respect to FIG. 1. That is, the second cooling plate 320 according to an embodiment of the present disclosure may cool the battery module 1000 while performing the role of the side plate 1220.

For example, when the secondary battery 100 is formed in the prismatic shape, the second cooling plate 320 may be formed in a substantially quadrangular plate shape. For example, the second cooling plate 320 may be formed in a rectangular shape formed to be relatively long in the longitudinal direction (the y-axis) of the battery module 1000 and relatively short in the height direction (the z-axis) of the battery module 1000.

Further, for example, the second cooling plate 320 may be formed to be connected to the first cooling plate 310. For example, the second cooling plate 320 may extend from a surface elongated from the first cooling plate 310. For example, the second cooling plate 320 may be bent and extend in a direction in which the first cooling plate 310 extends, and may be bent and extend in a vertical direction from the first cooling plate 310.

For example, a pair or two pairs of the second cooling plate 320 may be formed. For example, the pair (or two) of the second cooling plate 320 (for example, 321 and 322 in FIG. 5) disposed to face each other with the first cooling plate 310 therebetween may be formed.

In this case, the first cooling plate 310 and the second cooling plate 320 may be connected through welding. However, a method of connecting the first cooling plate 310 and the second cooling plate 320 is not limited thereto, and for example, the first cooling plate 310 and the second cooling plate 320 may be connected by various types of coupling methods such as bolting, fitting, and the like.

Furthermore, for example, the second cooling plate 320 may replace the role of the end plate 1210 described with respect to FIG. 1. That is, the second cooling plate 320 according to an embodiment of the present disclosure may cool the battery module 1000 while performing the role of the end plate 1210.

Each of the first cooling plate 310 and the second cooling plate 320 may constantly maintain a temperature of the battery module 1000. For example, the first cooling plate 310 and the second cooling plate 320 may effectively remove heat generated from the secondary batteries 100 and/or the battery module 1000.

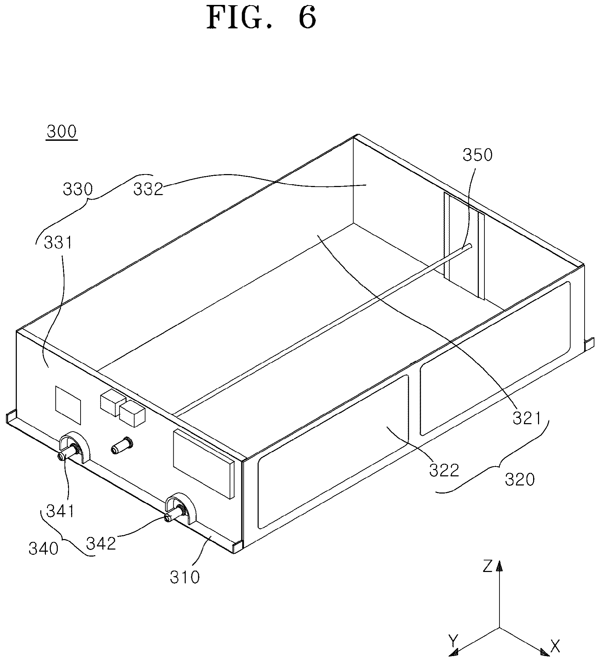

For example, at least one of the first cooling plate 310 and the second cooling plate 320 includes a cooling flow path 340 (see FIG. 6) through which a coolant which cools the battery module 1000 circulates.

In this case, the coolant is a medium for cooling. The coolant includes, for example, cooling water but this may vary.

For example, the cooling flow path 340 may be formed as an upper plate and a lower plate respectively forming accommodation units of a recessed structure are coupled. In this case, the accommodation units of the upper plate and the lower plate may be formed in shapes corresponding to each other (e.g., mirror images of each other).

In other embodiments, for example, the cooling flow path 340 may be formed in a pipe shape. In this case, at least one of the first cooling plate 310 and the second cooling plate 320 may include the upper plate and the lower plate to fix the cooling flow path 340. The cooling flow path 340 may be located between the upper plate and the lower plate.

The cooling flow path 340 serves as a path through which the coolant may circulate. The coolant may allow the temperature of the battery module 1000 to be constantly maintained through heat exchange with the secondary battery 100 via the cooling flow path 340.

In this case, the cooling flow path 340 may be disposed so that an area where the coolant and the secondary battery 100 may exchange heat increases. For example, the cooling flow path 340 is disposed so that the coolant introduced into a coolant inlet 341 (see FIG. 6) circulates along at least portions of the first cooling plate 310 and the second cooling plate 320 and then is discharged along a coolant outlet 342 (see FIG. 6). For example, the cooling flow path 340 may be disposed in a meandering zigzag shape to enhance the cooling efficiency.

In this case, the cooling flow path 340 may be formed as one pipe and disposed across the entire first cooling plate 310 and second cooling plate 320. In other embodiments, the cooling flow path 340 may be formed as a plurality of pipes and disposed across each of the first cooling plate 310 and the second cooling plate 320.

In still other embodiments, for example, at least one of the first cooling plate 310 and the second cooling plate 320 is formed with one or more cooling holes which cool the battery module 1000.

The one or more cooling holes may be formed through at least one of the first cooling plate 310 and the second cooling plate 320. The one or more cooling holes may form a mesh structure or a honeycomb-shaped structure in at least one of the first cooling plate 310 and the second cooling plate 320. In other embodiments, the one or more cooling holes may be a plurality of cooling holes which may be formed to be spaced apart in at least one of the first cooling plate 310 and the second cooling plate 320.

The first cooling plate 310 and/or the second cooling plate 320 may allow heat generated in the battery module 1000 to be discharged to the outside through the plurality of cooling holes while maintaining the exterior of the housing 300.

For example, at least one of the first cooling plate 310 and the second cooling plate 320 may be formed with the plurality of cooling holes while including the cooling flow path. For example, the cooling holes may be formed in a region through which the cooling flow path does not pass. For example, the cooling hole may be formed at a point where the cooling efficiency of the coolant is reduced. Accordingly, the battery module 1000 may further enhance the cooling efficiency.

Thus, the housing 300 according to an embodiment of the present disclosure provides a method capable of simultaneously cooling the lower and side surfaces of the battery module 1000. Accordingly, the battery module 1000 may increase a cooling area and enhance the cooling efficiency compared to a conventional battery module. Further, as the battery module 1000 provides a method capable of cooling a side portion of the secondary battery 100, it is possible to reduce a temperature deviation occurring between the upper and lower portions of the secondary battery 100 and/or the battery module 1000. Accordingly, the battery module 1000 provides a method in which safety is enhanced. Further, the battery module 1000 may enhance the process efficiency by integrating the housing and cooling plate.

The battery module 1000 may further include an insulating sheet 400 (see FIG. 5). The insulating sheet 400 may prevent heat from propagating between the secondary batteries 100 (e.g., between the battery laminates 200 of the secondary batteries 100).

The insulating sheet 400 may include an insulating material. For example, the insulating sheet 400 may be formed as a first insulating material and a second insulating material that are mixed. In other embodiments, for example, the insulating sheet 400 may include first layers including the first insulating material and second layers including the second insulating material. In this case, the first layers and the second layers may be formed to be alternately stacked. In still other embodiments, the first layer may be formed between two second layers.

For example, the first insulating material may include at least one of aerogel, wet silica, dry silica, polyurethane, polystyrene, polyethylene, polyester, and a combination thereof.

For example, the second insulating material may include at least one or a mixture of at least two of mica, kaolin, talc, diatomaceous earth, bentonite, silica, gangue, kaolin, polyimide, and polyethylene terephthalate.

For example, the insulating sheet 400 may be located in at least one of spaces between the plurality of secondary batteries 100. For example, the insulating sheet 400 may be located in at least one of spaces between the plurality of battery laminates 200. For example, the insulating sheet 400 may be located between a first battery laminate 201 and a second battery laminate 202.

Accordingly, the battery module 1000 may simultaneously prevent heat propagation and enhance the cooling efficiency.

These battery modules 1000 will be described in more detail below.

FIG. 6 is a perspective view of the housing according to an embodiment of the present disclosure.

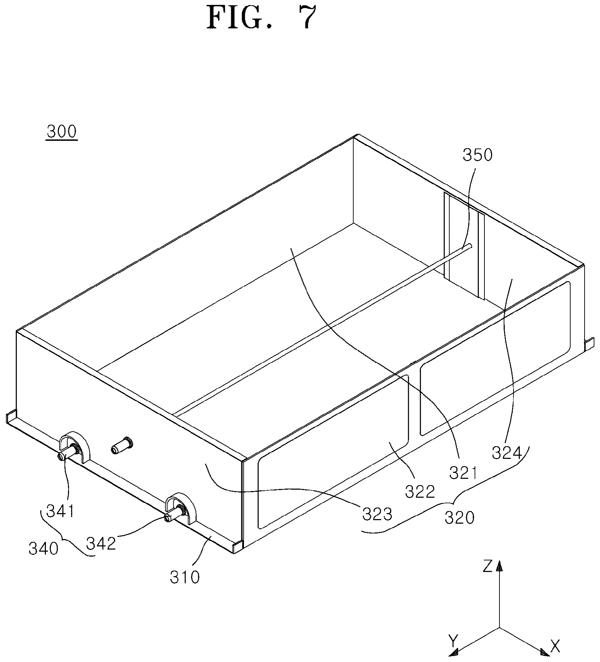

FIG. 7 is a perspective view of the housing according to an embodiment of the present disclosure.

The battery module 1000 according to an embodiment of the present disclosure includes the secondary batteries 100 and the housing 300. The housing 300 includes the first cooling plate 310 and the second cooling plates 320.

As shown in FIGS. 6 and 7, the second cooling plates 320 include the first side surface plate 321 and the second side surface plate 322 located to face the first side surface plate 321.

For example, the first side surface plate 321 extends from one side of the first cooling plate 310 in the width direction (the x-axis) of the battery module 1000. For example, the second side surface plate 322 extends from the other side of the first cooling plate 310 in the width direction (the x axis) of the battery module 1000. The first side surface plate 321 and the second side surface plate 322 may be formed to be spaced apart from each other by as much as the first cooling plate 310. The first side surface plate 321 and the second side surface plate 322 may disposed to face each other.

Each of the first side surface plate 321 and the second side surface plate 322 is located on side surfaces of the plurality of secondary batteries 100. The first side surface plate 321 and the second side surface plate 322 perform heat exchange with the secondary batteries 100 and/or the battery module 1000 on the side surfaces of the plurality of secondary batteries 100. Accordingly, the first side surface plate 321 and the second side surface plate 322 may cool the battery module 1000 while forming side portions of the battery module 1000.

For example, as shown in FIG. 6, the housing 300 includes the first cooling plate 310, the second cooling plates 320, and end plates 330.

The end plates 330 form at least portions of the side surfaces of the housing 300. Further, when swelling of the secondary batteries 100 occurs, the end plates 330 may prevent the secondary batteries 100 from swelling and restrain the secondary batteries 100. Thus, the end plates 330 may support the housing 300 and enhance rigidity for the housing 300.

The end plate 330 may be formed as a flat plate. The end plate 330 is connected to one side and/or the other side of the first cooling plate 310 in the longitudinal direction (the y-axis) of the battery module 1000. For example, the end plate 330 is bent and extends from the one side and/or the other side of the first cooling plate 310. For example, the end plate 330 is vertically coupled to the one side and/or the other side of the first cooling plate 310.

For example, the end plates 330 include a first end plate 331 and a second end plate 332. The first end plate 331 connects one side of the first side surface plate 321 and one side of the second side surface plate 322. The second end plate 332 connects the other side of the first side surface plate 321 and the other side of the second side surface plate 322.

The end plates 330 support both end portions of the plurality of secondary batteries 100. For example, the end plates 330 support both end portions of the plurality of secondary batteries 100 arranged in the first direction.

For example, the end plate 330 may face each of the secondary batteries located at both end portions of the plurality of secondary batteries 100. For example, the first end plate 331 may face a secondary battery located at one end portion in the first direction among the plurality of secondary batteries 100, and the second end plate 332 may face a secondary battery located at the other end portion in the first direction among the plurality of secondary batteries 100.

Thus, the housing 300 may include the end plates 330 along with the first cooling plate 310 and the second cooling plates 320. Accordingly, the housing 300 may simultaneously enhance a force for supporting the battery module 1000 and the cooling efficiency.

In other embodiments, for example, as shown in FIG. 7, the housing 300 includes the first cooling plate 310 and the second cooling plates 320.

For example, the second cooling plates 320 includes the first side surface plate 321, the second side surface plate 322, a third side surface plate 323, and a fourth side surface plate 324.

The third side surface plate 323 connects one side of the first side surface plate 321 and one side of the second side surface plate 322. The fourth side surface plate 324 connects the other side of the first side surface plate 321 and the other side of the second side surface plate 322. The third side surface plate 323 and the fourth side surface plate 324 are formed to face each other.

In this case, the first side surface plate 321 and the second side surface plate 322 may cool the battery module 1000 through the cooling flow path 340 through which the coolant circulates. For example, the coolant may be introduced through the coolant inlet 341, may circulate through the first side surface plate 321, the first cooling plate 310, and the second side surface plate 322, and may be discharged through the coolant outlet 342. Further, the third side surface plate 323 and the fourth side surface plate 324 may cool the battery module 1000 through cooling holes. Accordingly, the housing 300 may enhance the cooling efficiency while reducing the flow path resistance.

In other embodiments, the first side surface plate 321 and the second side surface plate 322 may cool the battery module 1000 through the cooling holes. Further, the third side surface plate 323 and the fourth side surface plate 324 may cool the battery module 1000 through the cooling flow path 340. For example, the coolant may be introduced through the coolant inlet 341, may circulate through the third side surface plate 323, the first cooling plate 310, and the fourth side surface plate 324, and then may be discharged through the coolant outlet 342. Accordingly, the housing 300 provides a method of allowing the housing 300 to have rigidity while reducing the flow path resistance and enhancing the cooling efficiency.

Through this structure, the housing 300 may maximize the cooling efficiency of the battery module 1000.

Meanwhile, for example, the battery module 1000 further includes a flow path 350.

The flow path 350 is formed in the inner space of the housing 300. For example, the flow path 350 is formed in the inner space of the housing 300 along the first direction. The first direction includes, for example, the longitudinal direction (the y-axis) of the battery module 1000.

For example, the flow path 350 may be formed in a pipe shape which connects a pair of end plates 330 formed at both sides. Alternatively, for example, the flow path 350 may be formed in a pipe shape which connects a pair of side surface plates 323 and 324 formed at both sides. In other embodiments, for example, the flow path 350 may be formed in a pipe shape which connects a pair of side surface plates 321 and 322 formed at both sides.

For example, the flow path 350 may be provided between the first battery laminate 201 and the second battery laminate 202 when viewed from above. In this case, the flow path 350 may be provided at the upper portion of the secondary battery 100, or may be provided at the side portion of the secondary battery 100.

In some embodiments, the flow path 350 may be connected to a fire extinguishing agent storage tank located outside the housing 300 through a flow path pipe exposed to the outside of the housing 300. The flow path 350 may receive a fire extinguishing agent from the fire extinguishing agent storage tank.

The flow path 350 may be formed of a thermo-sensitive material which melts above a certain temperature.

In this case, the certain temperature may be, for example, an ignition temperature of the secondary battery 100. The certain temperature may be 100°C to 150°C. When the certain temperature is lower than 100°C, the flow path 350 may melt during a charging and discharging process of the secondary battery 100. In this case, inconvenience that the battery module 1000 may not normally operate occurs. In other embodiments, when certain temperature exceeds 150°C, the flow path 350 may melt long after a fire has occurred from the secondary battery 100. In this case, the cooling effect of the battery module 1000 is reduced as extinguishing the fire is delayed. Accordingly, it is preferable that the certain temperature be, for example, 100°C to 150°C.

For example, the thermo-sensitive material may include a PA12 material. In other embodiments, for example, the thermo-sensitive material may include HDPE, LLDPE, LDPE, ABS, AMSAN, or the like. For example, the flow path 350 may be formed in a tube shape of the PA12 material.

The flow path 350 releases the fire extinguishing agent present in the flow path 350 while melting above the certain temperature. In this case, since the flow path 350 is located in the inner space of the housing 300, the fire extinguishing agent may be released to the inner space of the housing 300.

However, the shape and/or arrangement of the flow path 350 according to an embodiment of the present disclosure may be installed outside the housing 1200 and allow the fire extinguishing agent to be injected into the housing 300. In this case, the flow path 350 may allow the fire extinguishing agent to be sprayed into the housing 300 when the internal temperature of the housing 300 increases above the certain temperature. Thus, the flow path 350 may be applied to the battery module 1000 in any shape and/or arrangement capable of spraying the fire extinguishing agent into the housing 300.

The fire extinguishing agent may include, for example, a liquid fire extinguishing agent. For example, the fire extinguishing agent may include at least one of sulfuric acid, potassium carbonate, sodium bicarbonate, aluminum sulfate, water, halon, halogen compounds, and a combination thereof.

Alternatively, the fire extinguishing agent may include, for example, a gas-type fire extinguishing agent and/or a solid-type fire extinguishing agent. For example, the fire extinguishing agent may include at least one of novec1230, nitrogen, solid aerosol, and a combination thereof.

Thus, the battery module 1000 provides a method of preventing thermal runaway when the thermal runaway occurs, and further enhancing safety by including the flow path 350.

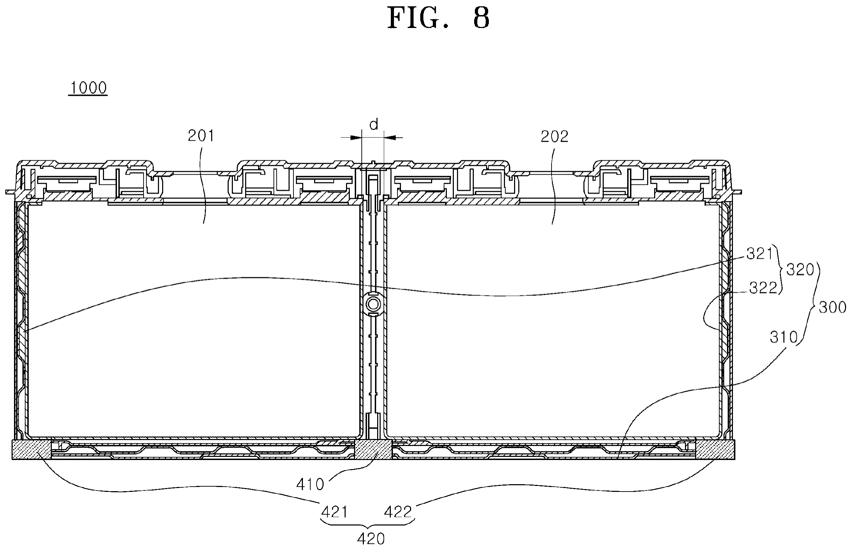

FIG. 8 is a cross-sectional view of the battery module according to an embodiment of the present disclosure.

The battery module 1000 according to an embodiment of the present disclosure includes the secondary batteries 100 and the housing 300. As described in FIGS. 1 to 7, the housing 300 includes the first cooling plate 310 and the second cooling plates 320.

For example, the battery module 1000 includes two or more battery laminates 200 arranged to be spaced apart from each other at a certain interval d (e.g., predetermined interval d).

For example, the first cooling plate 310 may further include a first reinforcement member 410 provided in response to (i.e. aligned with) the certain interval d. The battery laminates 200 may be spaced apart from each other at the certain interval d to prevent heat conduction therebetween and/or leave the space for swelling occurring during the charging and discharging. In this case, as the battery laminates 200 are spaced apart at the certain interval d, the first cooling plate 310 may receive an uneven load. The first reinforcement member 410 allows the first cooling plate 310 to overcome the uneven load generated by the certain interval d.

Alternatively, for example, the first cooling plate 310 may further include a second reinforcement member 420 provided in response to a region connected to the second cooling plate 320. The first cooling plate 310 may receive an uneven force at an edge portion connected to the second cooling plate 320. The second reinforcement member 420 allows the second cooling plate 320 to overcome this force. The second reinforcement member 420 may be formed, for example, at the one side of the first cooling plate 310 (for example, 421) and/or at the other side of the first cooling plate 310 (for example, 422).

The first reinforcement member 410 and/or the second reinforcement member 420 may be formed of any material having higher rigidity than the first cooling plate 310. For example, the first reinforcement member 410 and/or the second reinforcement member 420 may be formed of a material having higher tensile strength than the first cooling plate 310. For example, the first reinforcement member 410 and/or the second reinforcement member 420 may include Al5051, Al5052, Al5053, Al6061, Al6062, Al6063, Al7075, SUS, or the like.

Furthermore, the first cooling plate 310 may simultaneously include the first reinforcement member 410 and the second reinforcement member 420.

Thus, the first cooling plate 310 may enhance a lower support function of the battery module 1000 by reinforcing the load through a material having high rigidity.

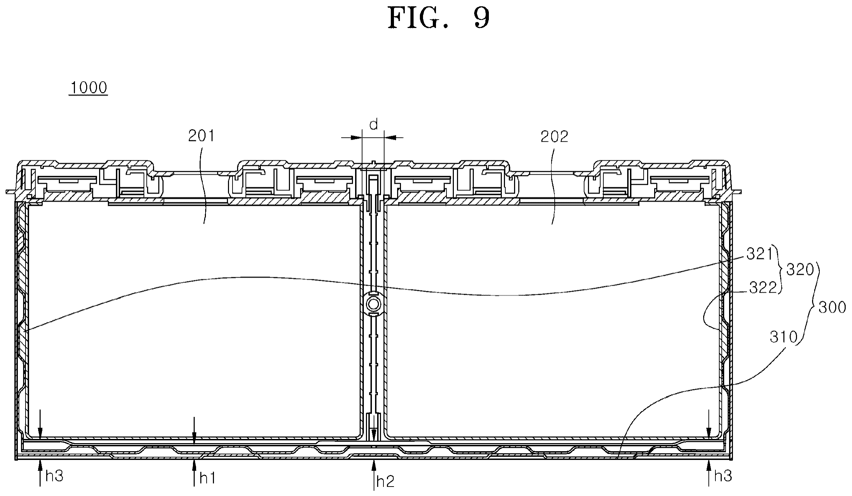

FIG. 9 is a cross-sectional view of the battery module according to an embodiment of the present disclosure.

The battery module 1000 according to an embodiment of the present disclosure includes the secondary batteries 100 and the housing 300. As described in FIGS. 1 to 7, the housing 300 includes the first cooling plate 310 and the second cooling plates 320.

For example, the battery module 1000 includes two or more battery laminates 200 arranged to be spaced apart from each other at the certain (e.g., predetermined) interval d.

For example, in the first cooling plate 310, a thickness h2 of a region corresponding to (e.g., aligned with) the certain interval d is formed to be thicker than a thickness h1 of a region corresponding to the battery laminate 200. The battery laminates 200 may be spaced apart from each other at the certain interval d to prevent heat conduction therebetween and/or leave the space for swelling occurring during the charging and discharging. In this case, as the battery laminates 200 are spaced apart at the certain interval d, the first cooling plate 310 may receive the uneven load. The first cooling plate 310 may be allowed to overcome the uneven load as the thickness h2 of the region corresponding to the certain interval d is formed to be relatively thick.

In other embodiments, for example, in the first cooling plate, a thickness h3 of the region connected to the second cooling plate 320 is formed to be thicker than the thickness h1 of a region corresponding to (e.g., in an area below) the plurality of secondary batteries 100. The first cooling plate 310 may receive the uneven force at the edge portion connected to the second cooling plate 320. The first cooling plate 310 may be allowed to overcome the uneven load as the thickness h3 of the connection portion is formed to be relatively thick.

Furthermore, the first cooling plate 310 may allow both h2 and h3 to be formed to be thicker than h1.

Furthermore, as the first cooling plate 310 may include the first reinforcement member 410 and/or the second reinforcement member 420, and a thickness of the first cooling plate 310 in a region where the first reinforcement member 410 and/or the second reinforcement member 420 is located may also be formed to be thick.

Thus, the first cooling plate 310 may enhance a lower support function of the battery module 1000 by adjusting a thickness of a partial region and reinforcing the load.

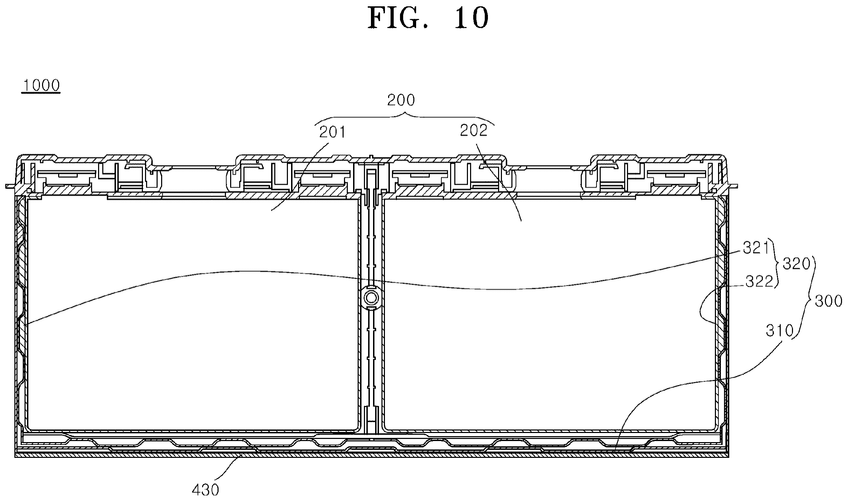

FIG. 10 is a cross-sectional view of the battery module according to an embodiment of the present disclosure.

The battery module 1000 according to an embodiment of the present disclosure includes the secondary batteries 100 and the housing 300. As described in FIGS. 1 to 7, the housing 300 includes the first cooling plate 310 and the second cooling plates 320.

For example, the battery module 1000 further includes a reinforcement plate 430 which supports a lower portion of the first cooling plate 310.

As shown in FIG. 10, the reinforcement plate 430 may support all or a portion of the lower portion of the first cooling plate 310. To this end, the reinforcement plate 430 may be formed in response to a size of the first cooling plate 310. Further, the reinforcement plate 430 may be formed in response to a shape of the first cooling plate 310. In addition, the reinforcement plate 430 may be formed in a plate shape to easily support the first cooling plate 310 formed in a plate shape.

The reinforcement plate 430 may be formed of any material having higher rigidity than the first cooling plate 310. For example, the reinforcement plate 430 may include Al5051, Al5052, Al5053, Al6061, Al6062, Al6063, Al7075, SUS, or the like.

Furthermore, the reinforcement plate 430 may be applied to the first cooling plate 310 simultaneously with the first reinforcement member 410 and/or the second reinforcement member 420 described with respect to FIG. 8.

Furthermore, the reinforcement plate 430 may be applied simultaneously with the first cooling plate 310 with the adjusted thickness, which is described with respect to FIG. 9.

Further, the reinforcement plate 430 may be applied simultaneously with the first reinforcement member 410, the second reinforcement member 420, and/or the first cooling plate 310 with the adjusted thickness, which are described in FIGS. 8 and 9.

Through this structure, the first cooling plate 310 may enhance a lower support function of the battery module 1000.

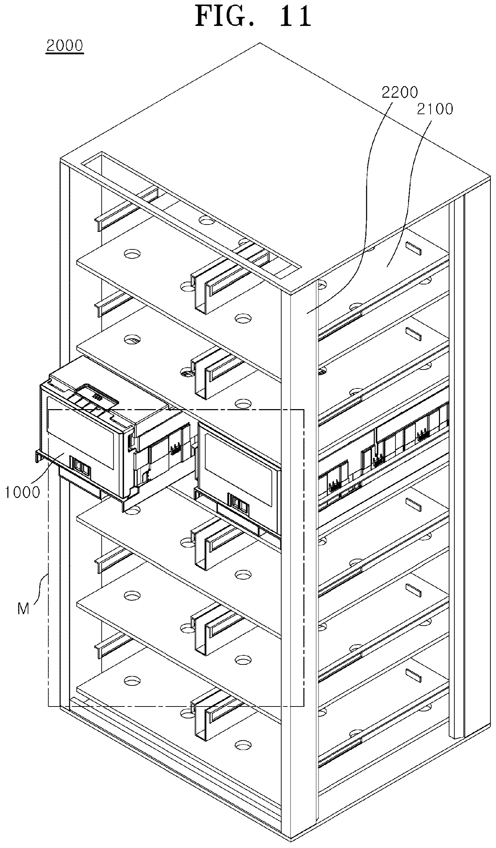

FIG. 11 is a perspective view of an energy storage system according to an embodiment of the present disclosure.

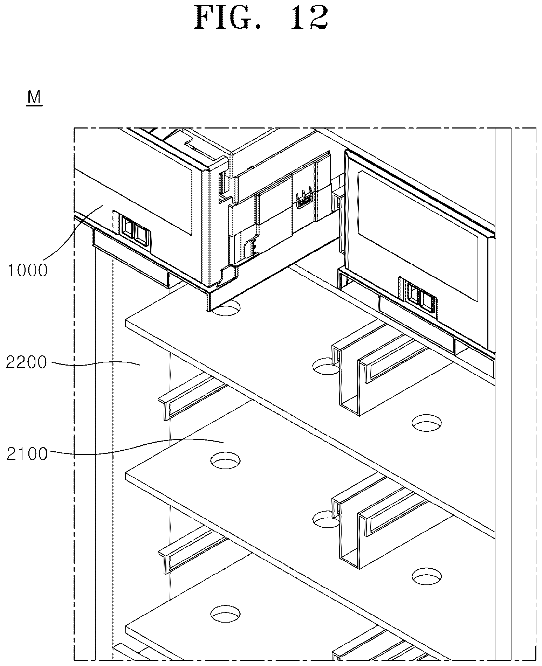

FIG. 12 is an enlarged view of portion M in FIG. 11.

An energy storage system 2000 according to an embodiment of the present disclosure includes a plurality of battery modules 1000, and racks 2100 and 2200 which accommodate the plurality of battery modules 1000.

The battery module 1000 includes a plurality of secondary batteries 100 and a housing 300 which accommodates the plurality of secondary batteries 100, and the housing 300 includes a first cooling plate 310 which supports lower portions of the plurality of secondary batteries 100, and one or more second cooling plates 320 formed to be connected to the first cooling plate 310 and surrounding at least portions of side surfaces of the plurality of secondary batteries 100.

The racks 2100 and 2200 provide a space where the battery modules 1000 may be stacked. For example, the racks 2100 and 2200 provide a space where the battery modules 1000 may be vertically stacked.

In this case, the racks include a support rack 2200 extending in a vertical direction and formed in a rod shape. Alternatively, the racks include a support rack 2200 extending in a vertical direction and formed in a plate shape. Further, the racks include a horizontal rack 2100 extending in a horizontal direction and formed in a plate shape.

For example, a plurality of support racks 2200 extend in a direction perpendicular to the ground and entirely support the energy storage system 2000.

For example, each of the plurality of horizontal racks 2100 is coupled to the support racks 2200 in a horizontal direction for the ground. Each of the plurality of horizontal racks 2100 may be coupled to the support racks 2200 in the vertical direction.

Accordingly, the racks may be formed in a shelf shape in which the battery modules 1000 may be entirely accommodated.

The battery module 1000 may be located on the horizontal rack 2100. One or more battery modules 1000 may be disposed on one horizontal rack 2100. This horizontal rack 2100 may support the load of the battery modules 1000.

Thus, the energy storage system 2000 according to an embodiment of the present disclosure provides the racks 2100 and 2200 of a shelf structure capable of supporting lower portions of the battery modules 1000. Accordingly, the energy storage system 2000 provides a method capable of supporting the load of the battery modules 1000 with the enhanced cooling efficiency.

According to an embodiment of the present disclosure, a battery module and/or an energy storage system with the enhanced cooling efficiency can be provided.

According to an embodiment of the present disclosure, a battery module and/or an energy storage system with reduced manufacturing costs can be provided.

According to an embodiment of the present disclosure, a battery module and/or an energy storage system capable of reducing the number of components can be provided.

However, technical effects acquirable through the present disclosure are not limited to the above-described technical effects, and other technical effects which are not mentioned will be clearly understood by those skilled in the art from the description of the invention described below.

Although the present disclosure has been described with reference to the embodiments shown in the drawings, these are merely exemplary, and it should be understood by those skill in the art that various modifications and equivalents are possible.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module (1000), comprising:
a plurality of secondary batteries (100); and
a housing (300) accommodating the plurality of secondary batteries (100), wherein the housing includes:
a first cooling plate (310) supporting lower portions of the plurality of secondary batteries; and
one or more second cooling plates (320) connected to the first cooling plate, the one or more second cooling plates surrounding at least portions of side surfaces of the plurality of secondary batteries.

2. The battery module as claimed in claim 1, wherein at least one of the first cooling plate (310) and the one or more second cooling plates (320) includes a cooling flow path (340) configured for circulation of a coolant.

3. The battery module as claimed in claim 1 or claim 2, wherein at least one of the first cooling plate (310) and the one or more second cooling plates (320) includes one or more cooling holes configured for cooling the battery module.

4. The battery module as claimed in any one of claims 1 to 3, wherein the one or more second cooling plates (320) includes a first side surface plate (321) and a second side surface plate (322) facing the first side surface plate (321).

5. The battery module as claimed in claim 4, further comprising an end plate (330) including a first end plate (331) that connects one side of the first side surface plate (321) and one side of the second side surface plate (322), and a second end plate (332) that connects another side of the first side surface plate (321) and another side of the second side surface plate (322).

6. The battery module as claimed in claim 4 or claim 5, wherein the second cooling plate (320) includes:
a third side surface plate (323) connecting one side of the first side surface plate (321) and one side of the second side surface plate (322); and
a fourth side surface plate (324) connecting another side of the first side surface plate (321) and another side of the second side surface plate (322).

7. The battery module as claimed in any one of claims 1 to 6, further comprising two or more battery laminates (200) of the plurality of secondary batteries (100) stacked in a first direction,
wherein the two or more battery laminates (200) are spaced apart from each other at a predetermined interval (d) in a second direction.

8. The battery module as claimed in claim 7, wherein the first cooling plate (310) further includes a first reinforcement member (410) aligned with the predetermined interval (d).

9. The battery module as claimed in claim 7, wherein the first cooling plate (310) has a thickness (h2) of a region corresponding to the predetermined interval (d) that is thicker than that (h1) of a region corresponding to the battery laminate (400).

10. The battery module as claimed in any one of claims 1 to 9, wherein the first cooling plate (310) further includes a second reinforcement member (420) in a region connected to the second cooling plate (320).

11. The battery module as claimed in any one of claims 1 to 10, wherein the first cooling plate (310) has a thickness (h3) of a region connected to the second cooling plate (320) that is thicker than that (h1) of a region corresponding to the plurality of secondary batteries (100).

12. The battery module as claimed in any one of claims 1 to 11, further comprising a reinforcement plate (430) supporting a lower portion of the first cooling plate (310).

13. An energy storage system (2000), comprising:
a plurality of battery modules (1000) according to any one of claims 1 to 12; and
a rack (2100, 2200) accommodating the plurality of battery modules (1000).
